# EUROPEAN PATENT SPECIFICATION

(11) **EP 3 686 101 B1**
(45) Date of publication and mention of the grant of the patent: **27.04.2022**
(21) Application number: 19206069.7
(22) Date of filing: 29.10.2019
(51) Int. Cl.: B62K 25/02, B60B 27/02, B60B 35/00, B60B 35/04

(54) **BICYCLE AXLE**
FAHRRADACHSE
ESSIEU DE BICYCLETTE

(30) Priority: 28.01.2019 TW 108201352 U; 14.03.2019 TW 108203104 U
(43) Date of publication of application: 29.07.2020
(73) Proprietor: Lee, Chung-Che, Taichung City 436 (TW)
(72) Inventor: Lee, Chung-Che, Taichung City 436 (TW)
(74) Representative: Lang, Christian

(56) References cited:
- FR-A1- 2 920 343
- TW-B- I 573 701
- TW-U- M 538 906
- US-A1- 2010 206 021

## Description

### BACKGROUND OF THE INVENTION

### Field of the Invention

The present invention relates to a bicycle axle.

### Description of the Prior Art

A conventional bicycle axle is configured to be disposed through a hub and fastened between front or rear dropouts. The conventional bicycle axle includes an axial member and a sleeve member. An end of the axial member has a head portion, another end of the axial member is configured for a nut to be screwed thereon, and the sleeve member is rotatably sleeved around the head portion. In operation, the axial member is driven to rotate by a driving tool so as to tighten the sleeve member and the nut on the front or rear dropouts.

Generally, an inner circumferential surface of the sleeve member and an outer circumferential surface of the head portion are processed to have corresponding engaging structures (such as thread, engaging projection or the like), and part of the sleeve member can pass through the outer circumferential surface of the head portion and axially interfere with the head portion so as to prevent the sleeve member from disengaging from the axial member. However, the conventional bicycle axle has a complicated structure and high cost for processing and assembling.

The present invention is, therefore, arisen to obviate or at least mitigate the above-mentioned disadvantages.

Patent publication TW I573701 B discloses a bicycle axle having the features of the preamble of claim 1. From utility model publication TW M538906 U and patent application publications US 2010/206021 A1 and FR 2920343 A1 further bicycle axles are known.

### SUMMARY OF THE INVENTION

The main object of the present invention is to provide a bicycle axle which has a simple structure and is easy to be manufactured and assembled.

To achieve the above and other objects, the present invention provides a bicycle axle having the features of claim 1. A preferred embodiment is subject-matter of dependent claim 2.

The present invention will become more obvious from the following description when taken in connection with the accompanying drawings, which show, for purpose of illustrations only, the preferred embodiment(s) in accordance with the present invention.

### BRIEF DESCRIPTION OF THE DRAWINGS

Fig. 1 is a stereogram of a first preferable embodiment of the present invention;
Fig. 2 is a breakdown drawing of the first preferable embodiment of the present invention;
Fig. 3 is a partial cross-sectional enlargement of Fig. 2;
Fig. 4 is another breakdown drawing of the first preferable embodiment of the present invention;
Fig. 5 is a cross-sectional view of the first preferable embodiment of the present invention;
Figs. 6 and 7 are schematic diagrams showing assembling of the first preferable embodiment of the present invention;
Fig. 8 is a partial enlargement of Fig. 7;
Figs. 9 and 10 are schematic diagrams showing assembling of a bicycle axle not covered by the claims;
Fig. 11 is a stereogram of a bicycle axle not covered by the claims;
Fig. 12 is a breakdown drawing of said bicycle axle not covered by the claims;
Fig. 13 is a cross-sectional view of said bicycle axle not covered by the claims;
Fig. 14 is a partial cross-sectional enlargement of said bicycle axle not covered by the claims;
Fig. 15 is a breakdown drawing of a further bicycle axle not covered by the claims;
Fig. 16 is a cross-sectional view of said bicycle axle not covered by the claims;
Fig. 17 is a partial cross-sectional enlargement of said bicycle axle not covered by the claims;
Fig. 18 is a breakdown drawing of a further bicycle axle not covered by the claims;
Fig. 19 is a cross-sectional view of said bicycle axle not covered by the claims;
Fig. 20 is a stereogram of said bicycle axle not covered by the claims;
Fig. 21 is a stereogram of a further bicycle axle not covered by the claims;
Fig. 22 is a cross-sectional view of said bicycle axle not covered by the claims;
Figs. 23 and 24 are schematic diagrams showing assembling of said bicycle axle not covered by the claims.

### DETAILED DESCRIPTION OF THE PREFERRED EMBODIMENTS

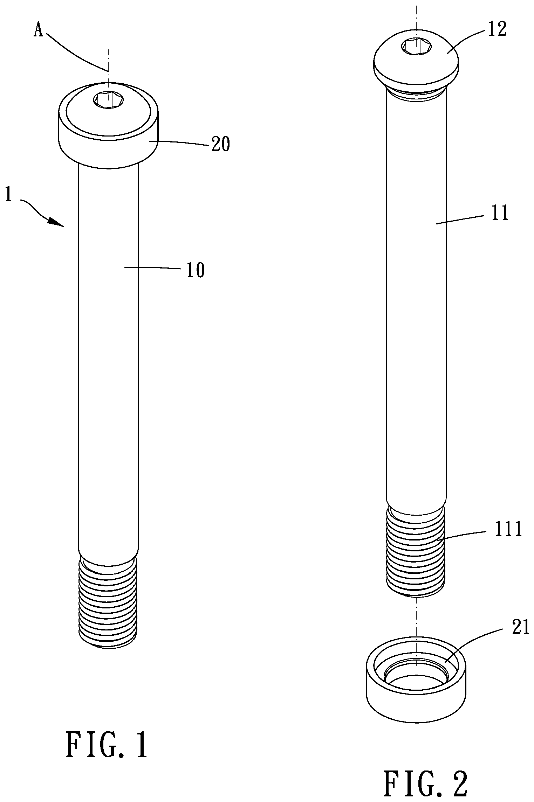

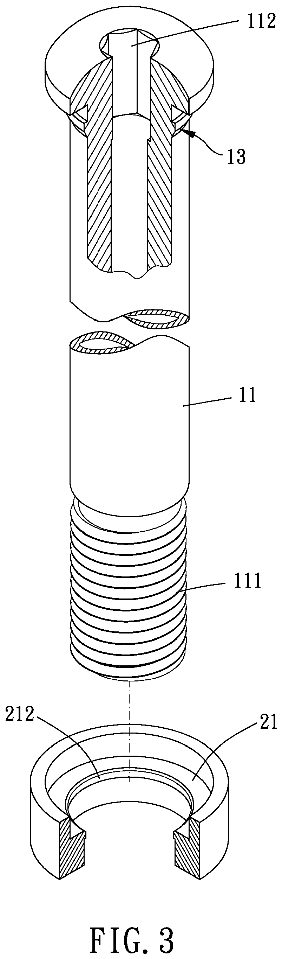

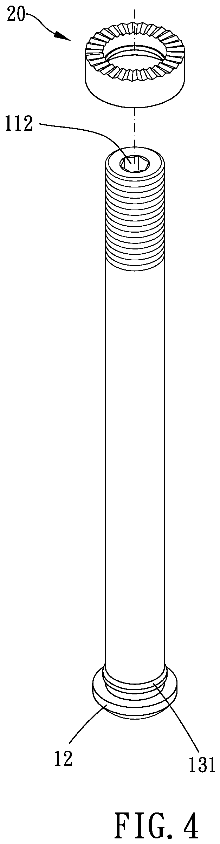

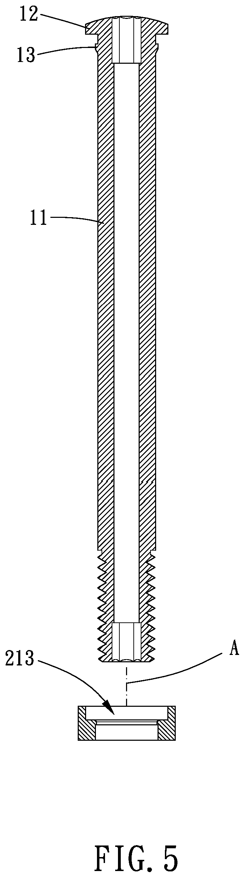

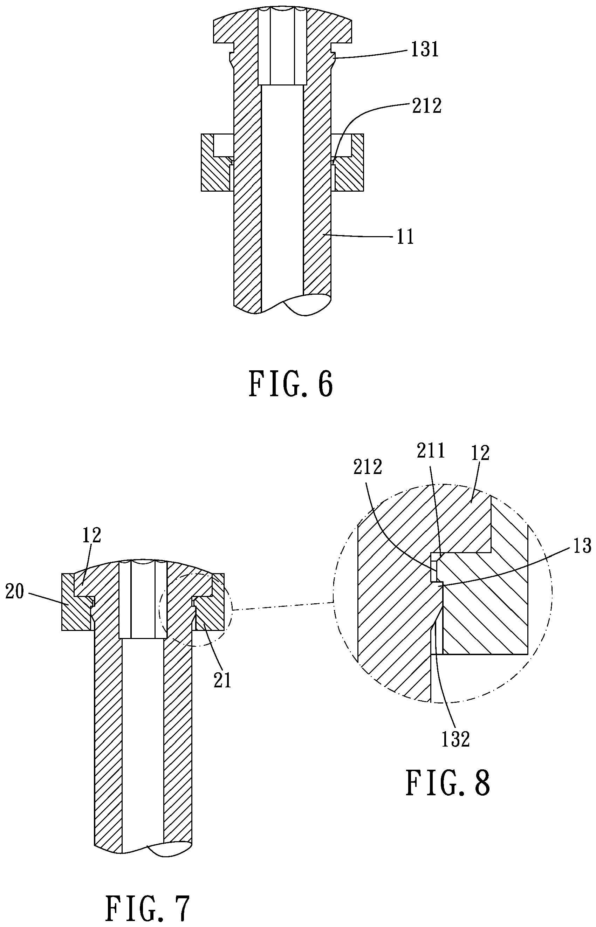

Please refer to Figs. 1 to 8 for a first preferable embodiment of the present invention. A bicycle axle 1 of the present invention includes a mandrel 10 and a sleeve member 20.

The mandrel 10 defines an axial direction A and includes an axial rod 11 and a head portion 12 radially protruding from an end of the axial rod 11. The sleeve member 20 is sleeved around the head portion 12 and includes a flange 21 radially extending inwardly. One of the axial rod 11 and the sleeve member 20 has an engaging portion 13 radially disposed thereon, the engaging portion 13 and the flange 21 are overlapped with the head portion 12 in the axial direction A, and the sleeve member 20 is rotatably restricted to the head portion 12 by the engaging portion 13. Therefore, the sleeve member 20 can be assembled to the mandrel 10 and the bicycle axle 1 has a simple structure and is easy to be manufactured and assembled.

The engaging portion 13 radially protrudes from the axial rod 11 and is axially spaced apart from the head portion 12, and at least part of the flange 21 is located between the head portion 12 and the engaging portion 13 and is abuttable against the head portion 12 and the engaging portion 13 in the axial direction A. Specifically, the flange 21 and the head portion 12 may be at least partially overlapped with, interfere with or contact the engaging portion 13 in the axial direction A, or be circumferentially abutted against the engaging portion 13.

The engaging portion 13 includes at least one engaging projection 131, and the at least part of the flange 21 is interferable with the at least one engaging projection 131 in the axial direction A so that the flange 21 is abuttable against the at least one engaging projection 131 to prevent the sleeve member 20 from being disassembled from the axial rod 11. Each of the at least one engaging projection 131 includes an inclined guiding surface 132 located at a side remote from the head portion 12 so that the flange 21 can be smoothly passed through each of the at least one engaging projection 131 for easy assembling. In this embodiment, the at least one engaging projection 131 is an annular projection integrally disposed on the axial rod 11, and the annular projection has the inclined guiding surface 132, which is easy to assemble and stably restricts the sleeve member 20. However, in other examples not falling within the scope of the claims, the at least one engaging projection may include a plurality of blocks or ribs which are spacingly disposed around the axial rod.

Preferably, at least one of two axially opposite sides of the inner circumferential surface of the flange 21 has a guiding surface 211 tilted outwardly for easy assembling. In this example, a side of the inner circumferential surface of the flange 21 adjacent to the head portion 12 has the guiding surface 211 annularly disposed thereon, which can guide the sleeve member 20 without alignment. In other examples, the two axially opposite sides of the inner circumferential surface of the flange may have respective guiding surfaces, which is convenient for assembling or disassembling the sleeve member. The flange may include a plurality of said guiding surfaces spacingly disposed therearound.

The axial rod 11 may be made of aluminum, and the engaging portion 13 preferably protrudes radially beyond and outer circumferential surface of the axial rod 11 by 0.2 mm to 0.5 mm. The engaging portion 13 is radially deformable so that the flange 21 is easy to pass through the engaging portion 13 without abrasion. Specifically, the inner circumferential surface of the flange 21 has a lip 212 radially and inwardly protruding therefrom, and the lip 212 is located between the head portion 12 and the engaging portion 13 and is interferable with the head portion 12 and the engaging portion 13 in the axial direction A. The flange 21 defines a penetrating hole 213 through which the mandrel 10 penetrates. In the axial direction A, a distance between the head portion 12 and the engaging portion 13 is larger than (preferably) or equal to a thickness of the lip 212 so that the sleeve member 20 can smoothly rotate relative to the mandrel 10. Relative to an axle center of the axial rod 11, a minimum diametric dimension of the penetrating hole 213 is smaller than a maximum diametric dimension of the engaging portion 13 so that the lip 212 is stably restricted between the engaging portion 13 and the head portion 12. In other examples not falling within the scope of the claims, the minimum diametric dimension of the penetrating hole may be equal to the maximum diametric dimension of the engaging portion, and when the lip radially corresponds to the engaging portion, the lip is circumferentially abutted against the engaging portion and passes through the engaging portion so that the lip is not easy to detach from the engaging portion, which is convenient for assembling and disassembling.

The head portion 12 and the axial rod 11 are integrally formed of one piece so as to have good structural strength. An end of the axial rod 11 opposite to the head portion 12 has a threaded segment 111 which is configured to be screwed with a nut. Each of two end surfaces of the axial rod 11 has an assembling hole 112, such as a hexagonal hole, which is configured to be assembled with a driving tool or wrench to rotate the mandrel 10.

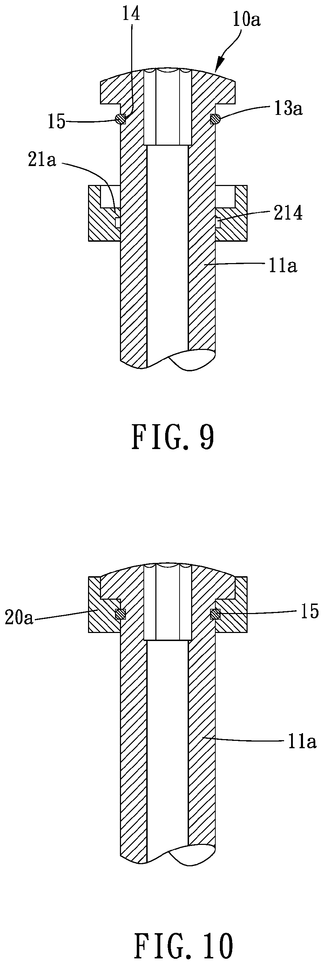

Please refer to figures 9 and 10 for an additional illustrative example of a bicycle axle, which, however, does not fall within the scope of the claims. Therein, the mandrel 10a further includes at least one groove 14 disposed on an outer circumferential surface of the axial rod 11a and at least one restricting member 15 received within the at least one groove 14, and the at least one restricting member 15 has the engaging portion 13a and protrudes beyond the outer circumferential surface of the axial rod 11a so as to restrict the flange 21a. In this example, the at least one groove 14 is an annular groove, and the at least one restricting member 15 is an O-ring. When the sleeve member 20a is assembled to the mandrel 10a, the O-ring is abutted against the flange 21a and is radially deformed so that at least part of the flange 21a can pass through the O-ring, and then the O-ring elastically recovers and is stably abutted against and restricts the flange 21a. The O-ring is elastically deformable and has good structural strength. The at least one groove may include a plurality of recessions, and the at least one restricting member may include a plurality of projections received within the plurality of recessions; the at least one restricting member may be a C-shaped retainer which is radially deformable for easy assembling; the at least one restricting member may have other configurations according to material characteristics and various requirements. The inner circumferential surface of the flange 21a may have at least one engaging concave 214 radially recessed thereon, and the engaging portion 13a may be embedded within the at least one engaging concave 214 so that the sleeve member 20a is stably assembled to the mandrel 10a and is smoothly rotatable relative to the mandrel 10a. In the shown illustrative example, the at least one engaging concave 214 is an annular recession which is convenient to assemble without alignment.

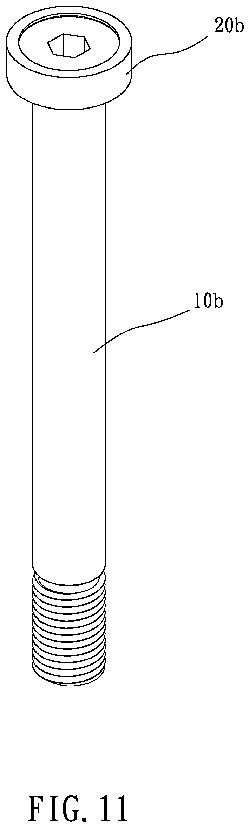

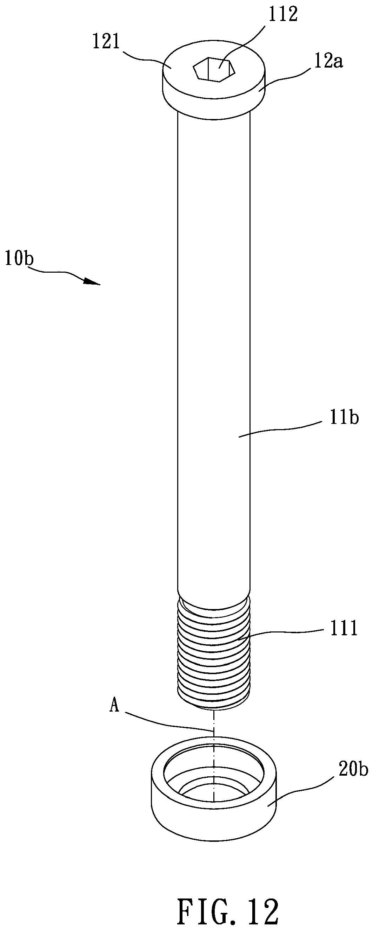

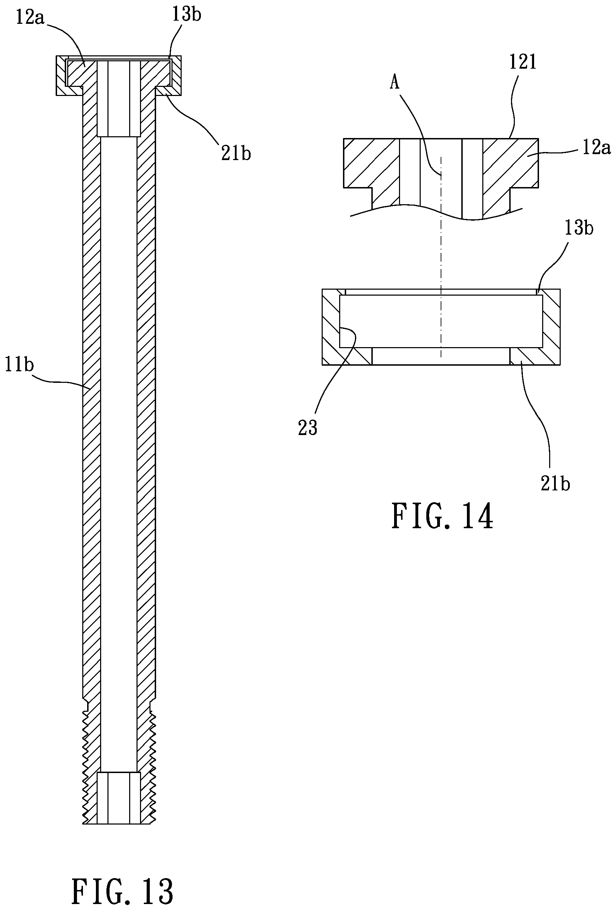

Please refer to figures 11 to 14 for another illustrative example of a bicycle axle not falling within the scope of the claims, in which the engaging portion 13b is disposed on the sleeve member 20b and axially corresponds to the flange 21b, and at least part of the engaging portion 13b protrudes beyond the head portion 12a in a direction away from the axial rod 11b. The head portion 12a includes an end surface 121 axially facing away from the axial rod 11b, and the engaging portion 13b is abuttable against the end surface 121 so as to prevent the sleeve member 20b from departing from the head portion 12a. In this illustrative example not being part of the claimed scope, the engaging portion 13b is an annular projection radially extending inwardly, and an outer diameter of the head portion 12a is larger than an inner diameter of the annular projection for stable engagement. The annular projection may radially protrude beyond an inner circumferential surface 23 of the sleeve member 20b by 0.4 mm to 0.6 mm; a thickness of the annular projection in the axial direction A may be between 0.4 mm to 0.6 mm. Therefore, the head portion 12a urges the annular projection to deform so as to directly assemble the sleeve member 20b to the head portion 12a, and the sleeve member 20b is not easy to disassemble from the head portion 12a and has preferable structural strength. However, the sleeve member without the annular projection may be sleeved around the head portion, and an end portion of the sleeve member is bent inwardly to form the engaging portion; the engaging portion may include a plurality of blocks spacingly disposed around the inner circumferential surface of the sleeve member.

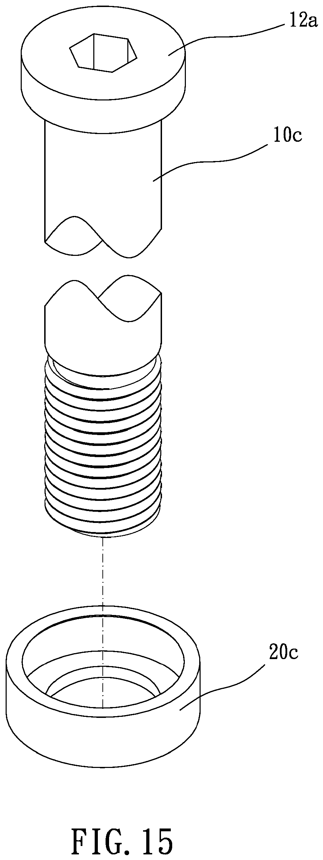

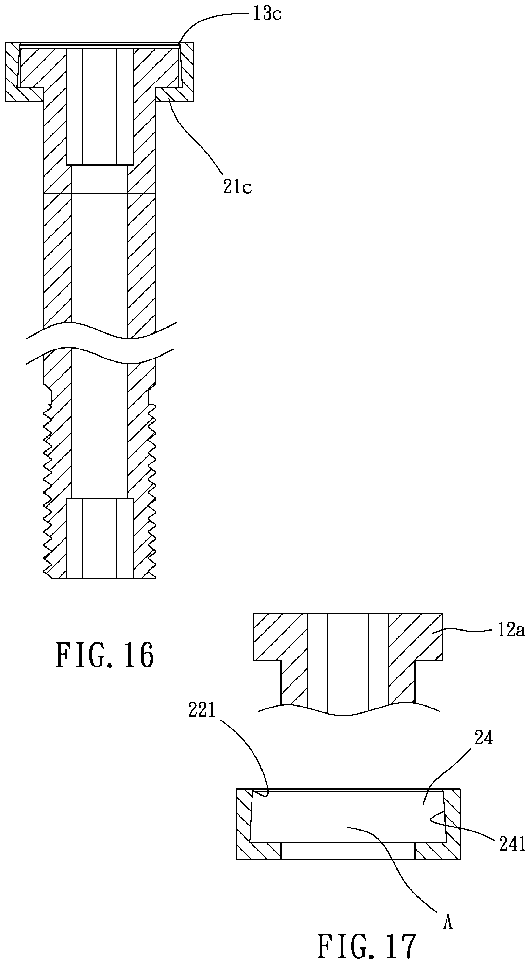

Please refer to figures 15 to 17 for yet another illustrative example of a bicycle axle, which does not fall within the scope of the claims, wherein the sleeve member 20c further includes a through hole 24, and a diametric dimension of the through hole 24 is gradually decreased (smoothly decreased, preferably) in a direction from the flange 21c toward the engaging portion 13c, which is convenient to assemble the sleeve member 20c. A difference between a maximum diameter and a minimum diameter of a reduced portion of the through hole 24 is between 0.2 mm to 0.4 mm so that a distance between the sleeve member 20c and the head portion 12a is gradually decreased until the sleeve member 20c and the head portion 12a are abuttable against each other so as to restrict axial movement of the sleeve member 20c. The sleeve member 20c and the head portion 12a have an interval therebetween so that the mandrel 10c and the sleeve member 20c are smoothly rotatable relative to each other. The engaging portion 13c includes an inclined blocking surface 221 which is adjacently connected to a wall 241 of the through hole 24, and the inclined blocking surface 221 is at least partially overlapped with the head portion 12a in the axial direction A so as to prevent the sleeve member 20c from departing from the head portion 12a. In other examples thereof not covered by the claims, the penetrating hole may have a fixed hole diametric dimension and the wall of the through hole and the inclined blocking surface are connected with each other, the outer circumferential surface of the head portion is abutted against the inclined blocking surface and tapered in a direction toward the axial rod, which is convenient to be sleeved with the sleeve member.

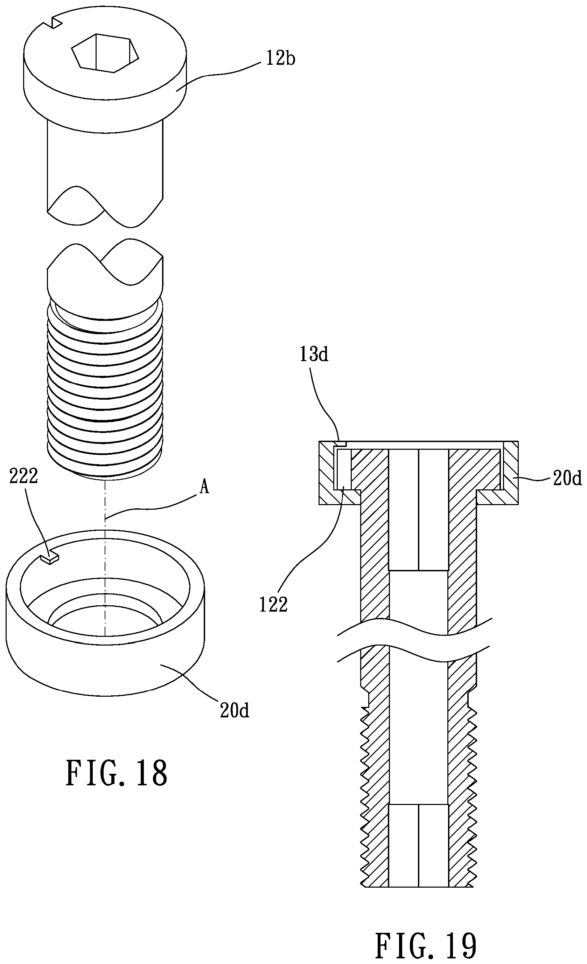

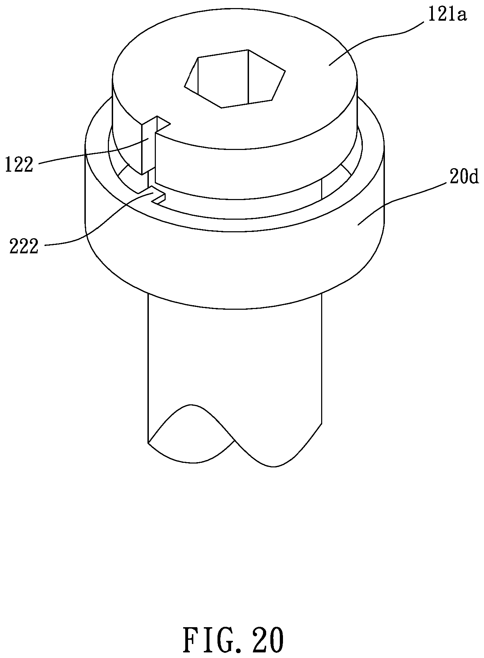

Please refer to figures 18 to 20 for still another illustrative example of a bicycle axle not falling within the scope of the claims, in which the head portion 12b has a first guiding portion 122, and the engaging portion 13d has a second guiding portion 222 corresponding to the first guiding portion 122. When the first guiding portion 122 is aligned with the second guiding portion 222, the sleeve member 20d is movable relative to the head portion 12b in the axial direction A so that the sleeve member 20d is replaceable and easy to be assembled. One of the first guiding portion 122 and the second guiding portion 222 is a guiding projection, and the other of the first guiding portion 122 and the second guiding portion 222 is a guiding recession. In this illustrative example, the first guiding portion 122 is a guiding recession extending on the outer circumferential surface of the head portion 12b along the axial direction A, the second guiding portion 222 is a guiding projection radially protruding inwardly, and the guiding projection is abuttable against the end surface 121a of the head portion 12b so as to prevent the sleeve member 20d from departing from the head portion 12b. Or, the first guiding portion may be the guiding projection, the second guiding portion may be the guiding recession, and the inner circumferential surface of the sleeve member has an annular groove within which the guiding projection is received. Preferably, when the mandrel is laterally moved relative to the sleeve member and abutted against the sleeve member, a maximum distance between the guiding recession and the inner circumferential surface of the sleeve member is equal to a distance that the guiding projection radially protruding beyond the inner circumferential surface of the sleeve member. Therefore, the sleeve member is detachable from the head portion only when the mandrel is laterally moved relative to the sleeve member and abutted against the sleeve member and the guiding recession is aligned with the guiding projection.

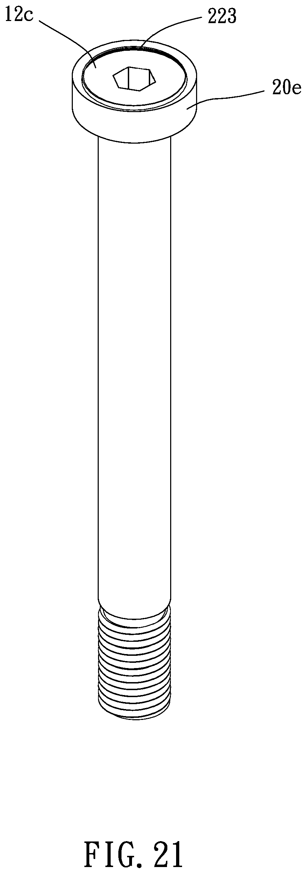

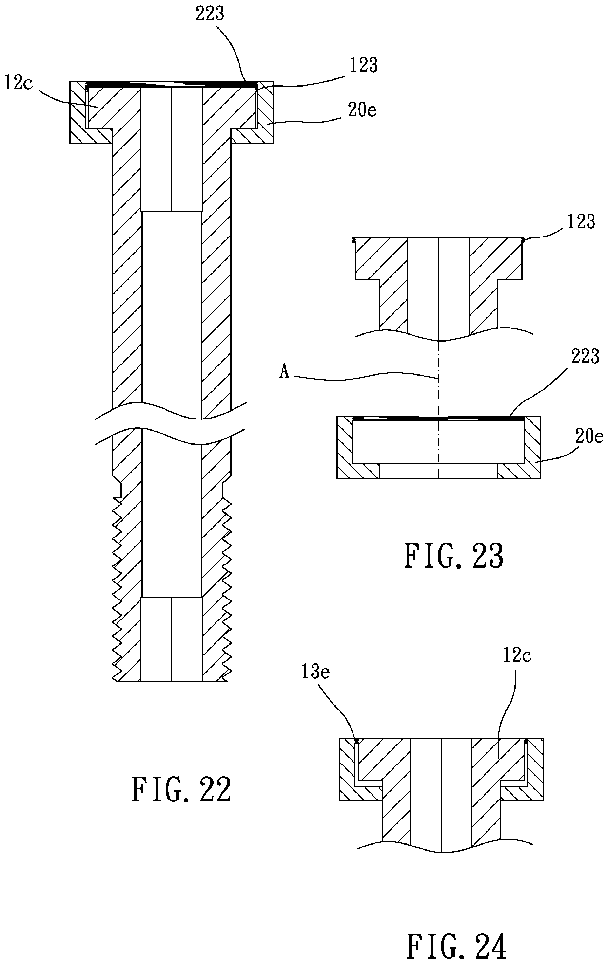

Please refer to figures 21 to 24 for still another illustrative example of a bicycle axle, which, however, does not fall within the scope of the claims. The head portion 12c has an outer threaded portion 123, and the engaging portion 13e has an inner threaded portion 223 which is configured to be screwed with the outer threaded portion 123. The inner threaded portion 223 is rotated to pass through the head portion 12c, and the inner threaded portion 223 and the outer threaded portion 123 interfere with each other in the axial direction A, which prevents the sleeve member 20e from departing from the head portion 12c and is easy to assemble and disassemble.

## Claims

1. A bicycle axle (1), including:
a mandrel (10), defining an axial direction (A), including an axial rod (11) and a head portion (12) radially protruding from an end of the axial rod (11);
a sleeve member (20), being sleeved around the head portion (12), including a flange (21) radially extending inwardly;
wherein the axial rod (11) has an engaging portion (13) radially disposed thereon, the engaging portion (13) and the flange (21) are overlapped with the head portion (12) in the axial direction (A), and the sleeve member (20) is rotatably restricted to the head portion (12) by the engaging portion (13),
wherein the engaging portion (13) radially protrudes from the axial rod (11) and is axially spaced apart from the head portion (12), wherein at least a part of the flange (21) is located between the head portion (12) and the engaging portion (13) and is abuttable against the head portion (12) and the engaging portion (13) in the axial direction (A), wherein an inner circumferential surface of the flange (21) has a lip (212) radially and inwardly protruding therefrom, wherein the lip (212) is located between the head portion (12) and the engaging portion (13) and is interferable with the head portion (12) and the engaging portion (13) in the axial direction (A),
wherein
the engaging portion (13) includes at least one engaging projection (131), at least a part of the flange (21) being interferable with the at least one engaging projection (131) in the axial direction (A),
the at least one engaging projection (131) being an annular projection disposed on the axial rod (11),
wherein the flange (21) defines a penetrating hole (213) through which the mandrel (10) penetrates, in the axial direction (A), a distance between the head portion (12) and the engaging portion (13) is larger than or equal to a thickness of the lip (212), and relative to an axle center of the axial rod (11), a minimum diametric dimension of the penetrating hole (213) is smaller than a maximum diametric dimension of the engaging portion (13),
wherein an end of the axial rod (11) opposite to the head portion (12) has a threaded segment (111),
**characterized in that**
the annular projection includes an inclined guiding surface (132) located at a side remote from the head portion (12), wherein each of two end surfaces of the axial rod has an assembling hole (112).

2. The bicycle axle (1) of claim 1, wherein the engaging portion (13) protrudes radially beyond an outer circumferential surface of the axial rod (11) by 0.2 mm to 0.5 mm; and wherein at least one of two axially opposite sides of the inner circumferential surface of the flange (21) has a guiding surface (211) tilted outwardly.

## Patentansprüche

1. Fahrradachse (1), umfassend:
einen Dorn (10), der eine axiale Richtung (A) definiert, mit einer axialen Stange (11) und einem Kopfabschnitt (12), der radial von einem Ende der axialen Stange (11) vorsteht,
ein Hülsenelement (20), das um den Kopfabschnitt (12) herum geführt ist und einen sich radial nach innen erstreckenden Flansch (21) aufweist,
wobei die axiale Stange (11) einen Eingriffsabschnitt (13) aufweist, der radial darauf angeordnet ist, wobei der Eingriffsabschnitt (13) und der Flansch (21) mit dem Kopfabschnitt (12) in der axialen Richtung (A) überlappt sind und das Hülsenelement (20) durch den Eingriffsabschnitt (13) drehbar an dem Kopfabschnitt (12) begrenzt ist,
wobei der Eingriffsabschnitt (13) radial von der axialen Stange (11) hervorsteht und axial von dem Kopfabschnitt (12) beabstandet ist,
wobei mindestens ein Teil des Flansches (21) zwischen dem Kopfabschnitt (12) und dem Eingriffsabschnitt (13) angeordnet ist und in der axialen Richtung (A) an dem Kopfabschnitt (12) und dem Eingriffsabschnitt (13) anliegen kann,
wobei eine innere Umfangsfläche des Flansches (21) eine Lippe (212) aufweist, die radial und nach innen davon vorsteht, wobei die Lippe (212) zwischen dem Kopfabschnitt (12) und dem Eingriffsabschnitt (13) angeordnet ist und mit dem Kopfabschnitt (12) und dem Eingriffsabschnitt (13) in der axialen Richtung (A) in Wechselwirkung bringbar ist,
wobei der Eingriffsabschnitt (13) mindestens einen Eingriffsvorsprung (131) aufweist, wobei mindestens ein Teil des Flansches (21) mit dem mindestens einen Eingriffsvorsprung (131) in der axialen Richtung (A) in Wechselwirkung bringbar ist,
wobei der mindestens eine Eingriffsvorsprung (131) ein ringförmiger Vorsprung ist, der an der axialen Stange (11) angeordnet ist,
wobei der Flansch (21) ein Durchgangsloch (213) definiert, durch das der Dorn (10) in der axialen Richtung (A) eindringt, wobei ein Abstand zwischen dem Kopfabschnitt (12) und dem Eingriffsabschnitt (13) größer als oder gleich einer Dicke der Lippe (212) ist und relativ zu einer Achsenmitte der axialen Stange (11) ist, wobei eine minimale diametrale Dimension des Durchgangslochs (213) kleiner ist als eine maximale diametrale Dimension des Eingriffsabschnitts (13), wobei ein Ende der axialen Stange (11) gegenüber dem Kopfabschnitt (12) ein Gewindesegment (111) aufweist,
**dadurch gekennzeichnet, dass**
der ringförmige Vorsprung eine geneigte Führungsfläche (132) aufweist, die an einer von dem Kopfabschnitt (12) entfernten Seite angeordnet ist, wobei jede der beiden Endflächen der axialen Stange ein Montageloch (112) aufweist.

2. Fahrradachse (1) nach Anspruch 1, bei welcher der Eingriffsabschnitt (13) radial über eine äußere Umfangsfläche der axialen Stange (11) um 0,2 mm bis 0,5 mm vorsteht und wobei mindestens eine von zwei axial gegenüberliegenden Seiten der inneren Umfangsfläche des Flansches (21) eine nach außen geneigte Führungsfläche (211) aufweist.

## Revendications

1. Essieu de bicyclette (1), incluant:
un mandrin (10), définissant une direction axiale (A), incluant une tige axiale (11) et une portion formant tête (12) faisant saillie radialement à partir d'une extrémité de la tige axiale (11),
un élément formant manchon (20), étant emmanché autour de la portion formant tête (12), incluant une collerette (21) s'étendant radialement vers l'intérieur,
dans lequel la tige axiale (11) présente une portion de mise en prise (13) disposée radialement sur celle-ci, la portion de mise en prise (13) et la collerette (21) sont recouvertes par la portion formant tête (12) dans la direction axiale (A), et l'élément formant manchon (20) est limité en rotation à la portion formant tête (12) par la portion de mise en prise (13),
dans lequel la portion de mise en prise (13) fait saillie radialement à partir de la tige axiale (11) et est espacée axialement de la portion formant tête (12), dans lequel au moins une partie de la collerette (21) est située entre la portion formant tête (12) et la portion de mise en prise (13) et peut venir en butée contre la portion formant tête (12) et la portion de mise en prise (13) dans la direction axiale (A),
dans lequel une surface circonférentielle interne de la collerette (21) présente une lèvre (212) faisant saillie radialement et vers l'intérieur à partir de celle-ci, dans lequel la lèvre (212) est située entre la portion formant tête (12) et la portion de mise en prise (13) et peut interférer avec la portion formant tête (12) et la portion de mise en prise (13) dans la direction axiale (A),
dans lequel la portion de mise en prise (13) inclut au moins une saillie de mise en prise (131), au moins une partie de la collerette (21) pouvant interférer avec l'au moins une saillie de mise en prise (131) dans la direction axiale (A),
l'au moins une saillie de mise en prise (131) étant une saillie annulaire disposée sur la tige axiale (11),
dans lequel la collerette (21) définit un trou de pénétration (213) à travers lequel pénètre le mandrin (10), dans la direction axiale (A), une distance entre la portion formant tête (12) et la portion de mise en prise (13) est supérieure ou égale à une épaisseur de la lèvre (212), et par rapport à un centre d'essieu de la tige axiale (11), une dimension diamétrale minimale du trou de pénétration (213) est inférieure à une dimension diamétrale maximale de la portion de mise en prise (13), dans lequel une extrémité de la tige axiale (11) opposée à la portion formant tête (12) présente un segment fileté (111),
**caractérisé en ce que**
la saillie annulaire inclut une surface de guidage inclinée (132) située au niveau d'un site distant de la portion formant tête (12),
dans lequel chacune de deux surfaces d'extrémité de la tige axiale présente un trou d'assemblage (112).

2. Essieu de bicyclette (1) selon la revendication 1, dans lequel la portion de mise en prise (13) fait saillie radialement au-delà d'une surface circonférentielle externe de la tige axiale (11) de 0,2 mm à 0,5 mm; et dans lequel au moins un de deux côtés axialement opposés de la surface circonférentielle interne de la collerette (21) présente une surface de guidage (211) penchée vers l'extérieur.
